(19) Europäisches Patentamt
European Patent Office
Office européen des brevets

(11) **EP 0 760 833 B1**

(12) **EUROPEAN PATENT SPECIFICATION**

(45) Date of publication and mention
of the grant of the patent:
**04.08.2004   Bulletin 2004/32**

(51) Int Cl.$^7$: **C08L 23/10**, C08J 5/18,
C08F 210/06

(21) Application number: **95922885.9**

(22) Date of filing: **24.05.1995**

(86) International application number:
**PCT/US1995/006576**

(87) International publication number:
**WO 1995/032242 (30.11.1995 Gazette 1995/51)**

(54) **Films made from propylene, higher alpha-olefin copolymers**

Folien Hergestellt aus Propylen, Hochalpha-Olefinpolymere

Films en copolymères de polypropylène et d'alpha-olefine superieure

(84) Designated Contracting States:
**BE DE ES FR GB IT NL**

(30) Priority: **24.05.1994  US 248120**

(43) Date of publication of application:
**12.03.1997   Bulletin 1997/11**

(73) Proprietor: **ExxonMobil Chemical Patents Inc.
Baytown, TX 77520-5200 (US)**

(72) Inventors:
• **McALPIN, James, John
  Houston, TX 77058 (US)**
• **MEHTA, Aspy, Keki
  Humble, TX 77346 (US)**
• **STAHL, G., Allan
  Humble, TX 77346 (US)**
• **AUTRAN, Jean, Philippe
  Cincinnati, OH 45215 (US)**

(74) Representative: **van Westenbrugge, Andries et al
  Nederlandsch Octrooibureau
  P.O. Box 29720
  2502 LS The Hague (NL)**

(56) References cited:
**EP-A- 0 384 264          US-A- 4 461 872**

**Description**

## TECHNICAL FIELD

This invention relates generally to films, made from propylene $\alpha$-olefin copolymers. The articles exhibit exceptional physical properties, including relatively low cold flow or creep. More specifically this invention relates to the use of certain propylene $\alpha$-olefin copolymers (formed utilizing a metallocene catalyst system) where the $\alpha$-olefin is selected from $\alpha$-olefins having 5 or more carbon atoms.

## BACKGROUND

Polyolefin polymers are well known articles of commerce. The uses of polyolefins are many and well known to those of skill in the art. Polyolefins have many useful physical properties. However, most polyolefins display unacceptable cold flow properties, that is, at room temperature or service temperature, they exhibit flow when subjected to low levels of stress for an extended period. Cold flow resistance is a property of importance in many polymer applications. Cold flow is defined as the non-recoverable deformation of a polymeric article in response to a force or stress (well below the yield stress of the material), applied for an extended time at a selected temperature. Different polymers will exhibit different resistances to cold flow.

Polypropylene homopolymers and copolymers have come into wide use. Over 5 million tons (4 million metric tons) of polypropylene are manufactured each year in the United States alone. Polypropylene has a wide range of commercial uses, from packaging films and sheeting to molded food containers and fibrous constructions employed in diapers and hospital gowns.

There are several classes of polypropylene. One of these classes is statistical copolymers of propylene and another $\alpha$-olefin, sometimes also known as random copolymers. In the past this class has tended to be represented largely by copolymers of propylene and ethylene, usually made using Ziegler-Natta catalysts. Copolymerization of higher $\alpha$-olefins (HAO) (those $\alpha$-olefins of 5 or greater carbon atoms) with propylene, using Ziegler-Natta catalysts has been problematic in the past due to the lower reactivity of these catalysts towards higher $\alpha$-olefins. The Ziegler-Natta catalyzed ethylene copolymers have generally found use based on their substantially different properties when compared to polypropylene homopolymers. Broadly, the differences between Ziegler-Natta catalyzed homopolymers and propylene-ethylene copolymers are seen in such properties as lower melting point, greater flexibility, better clarity and slightly improved toughness for the copolymer.

EP 0 495 099 A1 to Mitsui Petrochemical Industries discloses a method for polymerization of the propylene $\alpha$-olefins utilizing metallocene-alumoxane catalyst systems. The document also discloses a propylene $\alpha$-olefin copolymer where the propylene is present from 90-99 mole % and the $\alpha$-olefin is present from 1-10 mole %. This document discloses that the propylene $\alpha$-olefin copolymers would have a narrow molecular weight distribution (Mw/Mn), the copolymer would have a low melting point, and the copolymers have excellent softness. The document also discloses a straight line relationship between $T_m$ and propylene content, however, no distinction is drawn to the melting point depression effect of different $\alpha$-olefins.

EP 0 538 749 A1 to Mitsubishi Petrochemical Co. discloses a propylene copolymer composition to produce a film having excellent low-temperature heat sealing, where the composition has 1 to 70 wt% of A and 30-99 wt% of B where:

A is a propylene ethylene or $\alpha$-olefin copolymer where the $\alpha$-olefin has 4-20 carbon atoms and a $M_w/M_n$ of not more than 3.

B is a propylene ethylene or $\alpha$-olefin copolymer where the $\alpha$-olefin has 4-20 carbon atoms and a $M_w/M_n$ of 3.5 to 10.

Copolymer A is polymerized by a metallocene catalyst system.

Copolymer B is polymerized by a Ziegler-type catalyst.

Substantially all examples utilize propylene-ethylene copolymers or propylene homopolymers.

EP 0 318 049 A1 to Ausimont discloses crystalline copolymers of propylene with minor portions of ethylene and/or $\alpha$-olefins. The copolymers are disclosed to have very good mechanical properties. The copolymers are polymerized in the presence of methyalumoxanic compounds. The examples of this document show propylene-ethylene and propylene-1-butene copolymers.

US 4,461,872 discloses blends of an isotactic propylene polymer with a copolymer of propylene with $C_6$-$C_{12}$ $\alpha$-olefin, wherein the mol proportion of the $\alpha$-olefin is 10-55%.

Among the polymers that demonstrate acceptable cold flow resistance are polyvinyl chloride (PVC). The cold flow resistance of PVC enables it to be used in applications where the relatively poor cold flow of polyolefins would be unacceptable.

Fresh meat wrap is an example of the deficiency of polyolefins when compared to PVC. PVC films are known and valued for their ability to "snap back" after deformation. This snap-back attribute is directly related to the film's ability to resist cold flow. In retail meat displays, such deformation would be caused when the packaged meat is handled. Because of its "snap back", meat wrapped in PVC film, even after handling, does not show the effects of such handling. Polyolefins have repeatedly been tried in film applications such as meat wrap with little commercial success, because when deformed by handling, a polyolefin's tendency to cold flow leaves unacceptable finger marks or other depressions or distortions of the film even after the packaged meat itself has recovered (or substantially resumed the shape it had before deformation). Polypropylene and polyethylene of the polyolefins especially exhibit this deficiency, due to their relatively poor cold flow.

However, even though PVC has many advantages in applications as discussed above as well as many others, PVC has several substantial drawbacks that have made its replacement by other plastics, such as polyolefins, a high priority in many of those applications. As a first example of a drawback, the density of PVC is substantially higher than most polyolefins. The density of most PVC is about 1.2 g/cc versus a density well below 1.0 g/cc for most polyolefins. This has a very practical effect, that a given unit of weight of PVC will yield substantially less product than a unit of polyolefin. A second drawback of PVC is that upon combustion, for example in waste or trash incineration, PVC will evolve hydrochloric acid. Still another drawback, especially for food and medical related PVC applications, is the extractibility of plasticizers such as phthalate esters used in flexible PVC.

In other articles, such as fibers and fabrics, polyamides, polyesters and other such thermoplastics may be used in applications that are substantially foreclosed to polyolefins, such as apparel and fiber yams due to the polyolefin's relatively poor cold flow. In apparel, the cold flow resistance and "drape" or "hand" of polyolefins is generally deficient to that of other thermoplastics, for instance, a polyamide or polyester. The cold flow resistance of conventional polyolefins is noticeably defensive to the thermoplastics discussed above. Polyolefins in applications such as hosiery would show deformation after normal body movement leading to an undesirable baggy look.

In molded articles, shape is often a critical parameter. Cold flow due to a contained load or due to an applied exterior or interior force could cause unacceptable deformation in a molded part. Additionally, much less weight and time would be necessary to cause a load-set or deformation due to a static load such if the molded parts were fabricated from most conventional polyolefins.

More recently, a class of compounds having properties between those of cured rubbers and soft plastics have been investigated. These compounds are generally referred to as thermoplastic elastomers (TPE). The classical TPE structure involves a matrix of an uncured elastomer such as, for example, a polybutadiene, polyester or polyurethane, tied together by thermoplastic junction regions. A well known example of a TPE is Shell's Kraton ® G, a triblock of styrene and hydrogenated polybutadiene, where the thermoplastic crosslinking points are small domains of glassy polystyrene joined by rubbery polybutadiene blocks. This structure leads to behavior similar to vulcanized elastomers at ambient temperature but, at temperatures above the polystyrene softening point, the system undergoes plastic flow.

A subset of thermoplastic elastomers, embodying only olefin based polymers, is referred to as thermoplastic olefins (TPO). A typical TPO comprises a melt blend or like mixture of one or more thermoplastic polyolefin resins with at least one olefin copolymer elastomer (OCE). The thermoplastic polyolefin resin (usually a polypropylene) will give the TPO rigidity and temperature resistance while the elastomer imparts flexibility and resilience as well as improving the toughness of the material.

TPOs find particular application in the auto industry for flexible exterior body parts such as, for example, bumper covers, nerf strips, air dams and the like. In such appliclations, it is desired that the TPO have good resiliency (ability of the part to return to its original shape after deformation), impact strength at low temperatures, flexibility, high heat distortion temperature, surface hardness and surface finish characteristics. Additionally ease of processability and molding is desired.

Other application for TPOs include films, footwear, sporting goods, electric parts, gaskets, water hoses and belts, to name just a few. Particularly in films, elasticity and clarity properties are important. Other of the aforementioned properties will be important depending upon the desired application.

However, TPOs suffer compared to TPEs such as Kraton G due to the inability of the polypropylene matrix to resist stress over relatively long periods of time, and the TPOs defensive toughness or impact strength.

Polymer compositions such as TPEs exhibit cold flow resistance and resiliency that generally substantially exceeds that of TPOs. This cold flow resistance and resiliency enables TPEs to be used in applications where the relatively poor cold flow and resiliency of polyolefins would be unacceptable. Such applications include molded articles for automobiles and applicances. In molded articles, shape is often a critical parameter. Cold flow due to a contained load or due to an applied force could cause unacceptable deformation in a molded part. Additionally, much less weight and time would be necessary to cause a load-set or deformation due to a static load such if the molded pans were fabricated from most polyolefins rather than TPOs. Versus TPEs, the performance of most polyolefins would be even poorer.

Even though TPEs have many advantages as discussed above, their cost makes them unacceptable for some applications and marginally acceptable in others. Though much less expensive, TPOs on the other hand have not been an ideal choice either, due to the above mentioned physical properties.

There is therefore a need for a polyolefin, specifically a polypropylene copolymer that will resist cold flow to a sufficient extent that it could replace PVC, conventional polyolefins, or improve the properties of thermoplastic olefin compositions in many applications.

## SUMMARY OF THE INVENTION

It has been discovered that propylene copolymers made utilizing metallocene catalysts to polymerize propylene with α-olefin comonomers having 5 or more carbon atoms (higher α-olefins (HAO) , show a surprising enhancement in important physical properties when compared to propylene copolymers utilizing α-olefins of 4 carbon atoms or less (for purposes of this application this classification includes ethylene). In an emodiment of the present invention, the most striking step change is evidenced in cold flow or creep resistance values and the effect of these values on articles made from materials according to this embodiment.

In the present invention, films, are comprised of a copolymer of propylene and at least one HAO. The HAO is present in the copolymer in the range of from 0.2 to 6 mole percent based on the total moles of the copolymer. The copolymer will have a $M_w/M_n \leq 5$ and a peak melting point (DSC) in the range of from $100°$ C to $145°$ C and a MFR of 0.1-10 dg/min. A film made from these copolymers or their compounds can exhibit improved creep or cold flow resistance when compared to articles based on propylene-ethylene copolymers. Films made from propylene-HAO copolymers will be particularly useful in applications where minimizing cold flow or creep is important.

## BRIEF DESCRIPTION OF THE DRAWINGS

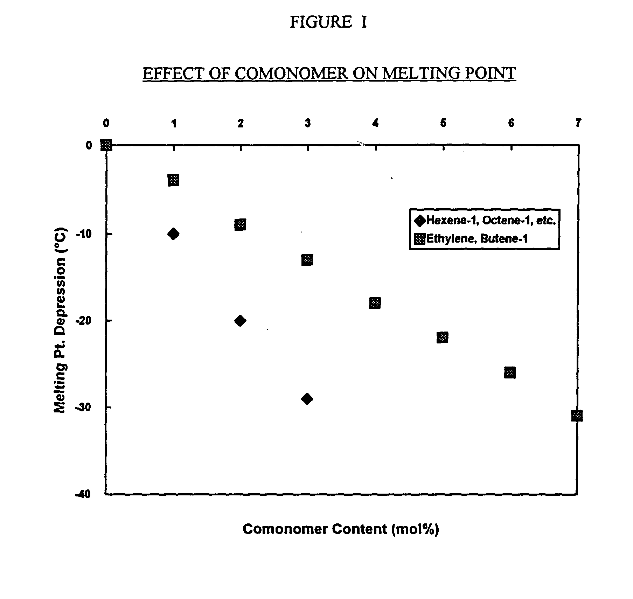

These and other features, aspects, and advantages of the present invention will become better understood with regard to the following description, appended claims and accompanying drawings where: Fig. 1 shows the effect of comonomer on melting point depression in a propylene copolymer.

## DESCRIPTION OF THE PREFERRED EMBODIMENTS

The present invention concerns certain classes of fabricated polypropylene films, and their uses. These films have unique characteristics which make them well suited for use in certain applications. Flexible films and priented films, made therefrom, have superior cold flow (creep) resistance compared to articles made from polypropylene-ethylene copolymers. A detailed description follows of certain preferred resins for use in fabricating articles that are within the scope of our invention, and preferred methods of producing these resins and their products.

Those skilled in the art will appreciate that numerous modifications to these preferred embodiments can be made without departing from the scope of the invention. For example, though the properties of films, are used to exemplify the attributes of the copolymers, the copolymers have numerous other uses. To the extent that our description is specific, this is solely for the purpose of illustrating preferred embodiments of our invention and should not be taken as limiting our invention to these specific embodiments.

The term random or statistical copolymer as used herein shall mean copolymers of propylene and other α-olefins polymerized in a medium which the contents of the various comonomers and other process conditions are maintained substantially constant throughout the course of the reaction. Variations in the composition of the resulting copolymers due to the existence of chemically distinct sites within the catalytic entity from which they are prepared or to normal variations experienced in sequenced reactors, as long as the resulting "reactor blend" polymers are miscible in the melt, are accepted in the current definition.

We have discovered that certain metallocene catalyst systems can be used to polymerize propylene statistical resins having properties which are highly desirable for conversion into various products. Generally these resins are isotactic polypropylene statistical copolymers and homopolymers, the copolymers utilize propylene and one or more alpha-olefins. For purposes of this application, the term isotactic is intended to mean a polymer where propylene tacticity distribution will be greater than about 90 percent mmmm pentads, where m is a meso diad, (m is defined as the same relative configuration of methyl groups of two successive monomer units (diad) to each other), preferably in the range of from 94 to 98 percent mmmm pentads, most preferably in the range of from 95 to 97 percent mmmm pentads, as determined by nuclear magnetic resonance (NMR).

## Production of the Resins

The polypropylene copolymers of the present invention are preferably produced using supported metallocene catalysts. The copolymers may be produced in many types of reactors or reaction schemes, including, but not limited to, fluidized bed or stirred bed gas phase reactors, slurry or bulk liquid reactors of tank or loop type, or any other process practiced for the polymerization of polypropylene. Series bulk liquid boiling propylene pool reactors are preferred.

Specific metallocene-type catalysts are known to be useful for producing isotactic olefin polymers and may be found in EPA 485 820, EPA 485 821, EPA 485 822, EPA 485 823, by Winter, et al. and US 5,017,867 by Welborn. These publications are incorporated by reference in the present application for the purposes of U.S. patent practice.

Various publications describe placing catalyst systems on a supporting medium and use of the resulting supported catalysts. These include U.S. Patent Numbers 5,006,500, 4,925,821, 4,937,217, 4,953,397, 5,086,025, 4,912,075, and 4,937,301 by Chang and U.S. Patent Numbers 4,808,561, 4,897,455, 5,077,255, 5,124,418, and 4,701,432 by Welborn, all of which are included in the present application by reference for purposes of U.S. patent practice.

Specific information on the use of support techniques for metallocene-type catalysts for use in the preparation of propylene $\alpha$-olefin polymers may be found in U.S. patent 5,240,894 by Burkhardt, which is also incorporated by reference for purposes of U.S. patent practice. While catalysts used for the following examples were employed in a bulk liquid-phase polymerization, catalysts for commercial use may be used in other processes including for example, gas phase and slurry processes.

Resins produced by the above referenced processes and catalysts will incorporate $\alpha$-olefin comonomers in the range of from 0.2 mole percent to 6 mole percent based on the total moles of the copolymer. Above 6 mole percent, the resulting resin will make an article with a melting point too low for many preferred applications. Below 0.2 mole percent comonomer, the flexural modulus becomes too high, leading to a product that is too stiff for many applications. In a more preferred embodiment, the $\alpha$-olefin comonomer is in the range of from 0.5 to 3 mole percent. In the most preferred embodiment, the $\alpha$-olefin is present in the range of from 1 to 3 mole percent.

In one preferred embodiment, the catalyst system comprises a silicon bridged bis (substituted 2-methyl-indenyl) zirconium dichloride or a derivative thereof, methyl alumoxane and an inorganic support. In a more preferred embodiment, dimethyl silyl bis (2-methyl-benzindenyl) zirconium dichloride is the metallocene of choice. This preferred catalyst system was used to generate the propylene-ethylene and propylene-hexene resins used in the films whose properties are shown in Table 1. However, it would be possible to copolymerize any $\alpha$-olefin of 2 to 20 carbon atoms utilizing these and similar catalyst systems. Further details regarding preparation of the catalyst system and production of the resin are provided in the examples that follow.

**Characteristics of the Resins**

The copolymers are isotactic in nature. The polymers will generally have a narrow molecular weight distribution, as characterized by the $M_w/M_n$ (weight average molecular weight/number average molecular weight) (molecular weight distribution MWD), $\leq 5$. Preferably $\leq 3.5$, more preferably $\leq 3.2$, most preferably $\leq 3.0$, and the most preferred $\leq 2.5$. $M_w/M_n$ (MWD) is determined by Gel Permeation Chromatography (GPC), as is molecular weight. Such techniques are well known. The techniques are described in copending application USSN 08/164,520 incorporated herein by reference for purposes of US patent practice. The polymers will exhibit melting points in the range of from 100° C to 145° C, more preferably, in the range of from 110° C to 135° C, most preferably in the range of from 115° C to 135° C.

Food law compliance can be an important criterion for articles made from these resins, such compliance usually directly affected by the extractable content of an article made from a resin. A standard of U.S. Food and Drug Administration as noted in 21 CFR § 177.1520 is to use the n-hexane reflux procedure, the maximum extractables level of the products of the present invention is expected to be less than 5 wt%, preferably less than 4 wt%, most preferably less than 3 wt%. The melt flow rate of the polymers of the present invention are in the range of from 0.1 to 10 dg/min.

In a preferred embodiment, for films the melt flow rates are in the range of from 1 to 10 dg/min.

Melt flow rates are measured by ASTM D-1238 condition L.

**Making a Film**

Films may be made by any techniques known by those of ordinary skill in the art. For example, blown films produced with an annular die and air cooling, or cast films using a slot die and a chill-roll for cooling are both acceptable techniques. Oriented films may be produced by either post extruder manipulation of the blown film through heating and orientation, or by longitudinal stretching of an extruded sheet followed by tentering techniques. Films are generally in the range of from 0.2 to 10 mils (5.08 to 254 $\mu$m).

**Properties of films**

The resins discussed above, when formed into films, will show superior properties when compared to either commercially available polypropylene homo or copolymer products or to metallocene catalyzed propylene ethylene or α-olefin copolymer resins where the α-olefin has 4 carbon atoms or less.

Prospective example 8 indicates that molded parts will show improved physical properties in the comparison noted above.

## Determination of $R_{ma}$

A parameter useful for defining cold flow or creep resistance is a value known as compliance. For purposes of this application, compliance is defined as the amount of strain observed on an article, that is placed under a specific stress for a specified time divided by the magnitude of the stress. Those of ordinary skill in the art will recognize that the stress should be below the specimen's yield stress.

A useful technique for evaluating the step change in properties between propylene-HAO copolymers including 1-hexene, 4-methyl-1-pentene and 1-octene and propylene-ethylene copolymers (both metallocene catalyzed) has been developed.

For films, molded articles, tubing, sheets, and similar articles, the technique uses the quotient of the compliance of a propylene-ethylene copolymer, divided by the compliance of a propylene- HAO copolymer.

The quotient is the symbol $R_{ma}$. where:

$$R_{ma} = \frac{\text{Compliance of propylene-ethylene article}}{\text{Compliance of propylene-HAO copolymer article}}$$

where the resins to form each article are chosen such that the tensile modulus of each article is substantially the same as that of the other article.

In the determination of $R_{ma}$, it is important that substantially all parameters that affect the physical properties of the articles in both the numerator and denominator of the factor be the same.

Such factors include, but are not limited to:

for the resins: molecular weights should vary by no more than 10%
for the fabricated article: fabrication conditions and techniques;
    dimensions of the test specimen;
    post fabrication treatments;
    blend components; or additives

It will be understood by those of ordinary skill in the art that comonomer content of either HAO or ethylene can be varied for purposes of attaining substantially the same tensile modulus in both the propylene-HAO and propylene-ethylene copolymers.

The choice of equal tensile modulii for the articles of both numerator and denominator ensures that the comparison is made at a constant degree of flexibility of the articles. Articles made from isotactic propylene-HAO copolymers of the present invention will have a $R_{ma}$ exceeding 1.1, indicating significantly improved resistance to cold flow compared to the statistical propylene-ethylene copolymers. Blends of olefin polymers, wherein at least one polymer is a statistical isotactic propylene-HAO copolymer are also contemplated as long as the $R_{ma}$ of the article is greater than 1.1. Possible blend materials may include, but are not limited to; ethylene copolymers of ethylenically unsaturated esters, polyethylene homopolymers and copolymers with α-olefins, polypropylene homo and copolymers, ethylene propylene rubbers (EP), ethylene, propylene, diene monomer elastomers (EPDM) additives such as slip agents, anti-static agents, colorants, antioxidants, stabilizers, fillers, and reinforcers such as $CaCO_3$, talc, and glass fiber, and other additives that will be well known to those of ordinary skill in the art.

An $R_{ma}$ of at least 1.1 indicates that an article will exhibit significantly better cold flow, or creep resistance than an article made from a propylene-ethylene copolymer. The greater the $R_{ma}$ number, the more improved the compliance of the propylene-HAO copolymer in relation to the propylene-ethylene based article. In a preferred embodiment, the $R_{ma}$ is at least 1.2. In a more preferred embodiment, the $R_{ma}$ is at least 1.3.

In addition, to better cold flow resistance, these propylene-HAO copolymers exhibit other improved physical properties. Table I compares physical properties of propylene copolymers of ethylene and propylene copolymers of HAOs and demonstrates that ultimate tensile strength, and impact strength of the propylene-HAO copolymers for example, are significantly improved.

A further indication of the fact that the class of propylene-HAO copolymers is distinct from the propylene-ethylene and propylene-butene propylene copolymer class, is found in the response of the melting points of the copolymers to comonomer incorporation. This is illustrated in Figure 1 It can be seen that the melting point depression for a given molar comonomer incorporation is about twice as much for the propylene-HAO copolymers as for the ethylene and butene resin class of propylene copolymers.

## Making Oriented Film

It is also contemplated that oriented polypropylene film (either uniaxially or biaxially oriented) can be advantageously fabricated from propylene-HAO copolymers of the present invention.

## Example 1

Preparation of Metallocene Catalyst

A silica supported metallocene catalyst was prepared according to the teachings of US Patent No. 5,240,894 using dimethyl silyl, bis(2 methyl, 4,5 benzindenyl) zirconium dichloride as the metallocene as described in Organo Metallics, v. 13, No. 3, 1994, p. 954-963. The catalyst recipe was 400 grams of silica (Davison 948), 10 grams of metallocene and 3 liters of 10 wt % methyl alumoxane (MAO) in toluene solution. Approximately 600 grams of the finished catalyst system was recovered. This catalyst was prepolymerized with one weight of ethylene per weight of catalyst system at a temperature of 15°C. The ethylene was added over a period of 1.5 hours to assure slow reaction rate.

## Example 2 (Comparative)

Preparation of Propylene-Ethylene Copolymers

Approximately 15 grams of ethylene and 550 grams of propylene were added to an autoclave maintained at 30°C. After allowing time for equilibration, 0.2 grams of the prepolymerized catalyst of example 1 was added to the reactor and the temperature raised to 50°C over a period of several minutes. An immediate reaction was observed. The reaction was terminated after 30 minutes to limit the extent of conversion of the ethylene so that its concentration in the reaction medium would be nearly constant over the period of the reaction. A total of 114 grams of propylene-ethylene statistical copolymer was obtained. Its weight average molecular weight as measured by size exclusion chromatography was 184,000, its ethylene content (measured by FTIR) was 3.3 wt %, and its peak melting point was 121° C.

## Example 3

Preparation of Propylene-1-Hexene Copolymers

To the autoclave of Example 2 was added 550 grams of propylene and 34 grams of hexene-1. The catalyst of Example 1 was added (0.2 grams) and the temperature controlled as in Example 2. The reaction was allowed to run for a total of two hours in this case since the relative reactivities of propylene and hexene-1 are nearly the same under these conditions. A total of 222 grams of propylene-hexene statistical copolymer was obtained. Its weight average molecular weight as measured by size exclusion chromatography was 204,000, its hexene-1 content was 2.9 wt % (measured by FTIR), and its peak melting point was 126° C.

## Example 4 (Prospective Example)

Preparation of Propylene 1-Octene Copolymers

To the autoclave of Example 2, 550 grams of propylene would be added along with approximately 45 grams of 1-octene as the molar amount of Example 3. The catalyst of Example 1 would be added and the temperature would be controlled as in Example 2. The reaction would be allowed to run for 2-3 hours as the reactivities of propylene and 1-octene would be nearly the same under these conditions. Over 200 grams of propylene-octene statistical copolymers could be expected. The average molecular weight as measured by size exclusion chromatography would be over 200,000. The octene-1 content would be expected to be between 2.0 and 4 wt % (if measured by FTIR), and its peak melting point would be in the range of 125-135° C.

### Examples 5 and 6

Film Preparation and Testing

These examples show preparation of films from the copolymers of examples 2 and 3 including details of procedures for film forming and property measurement. The data is summarized in Table 1. (Film preparation and testing from a resin produced in Example 4 would follow the same procedures.)

A film of the copolymer to be characterized was formed by compression molding 9.2 grams of the granular copolymer between Mylar® sheets in a form 15 x 15 centimeters in area and 0.5 mm in thickness. The molding procedure was: 1) close the platens (controlled at a temperature of 200° C) until they contact the sample; hold for one minute with no applied pressure; 2) increase the clamping force to 10 Tons and hold for one minute; 3) increase the clamping force to 40 tons and hold for two minutes; 4) release the clamping force and quench the film (still between the Mylar sheets) in a water bath at room temperature. After the films are conditioned for six days at room temperature, dumbbell samples are die-cut from the films.

The tensile properties of the resulting samples were measured on a Zwick REL 2051 tensile tester at a temperature of $25 \pm 2$ degrees C for the standard tensile properties, procedure DIN 53457 (1987) was adhered to. For the measurement time delayed compliance, the tensile specimen is loaded into the tester just as if one were doing the standard tensile test. A predetermined load is applied and the specimen elongation is recorded as a function of time. The load is chosen to be in the range of 50-60% of that which would cause the specimens to experience yielding (for samples presented here, a load of 11.7 MPa was chosen) The sample elongation recorded 480 seconds after the load is initially applied is chosen as a measure of cold flow for the particular load and this strain divided by the stress applied is designated "the time-delayed compliance".

The results of the evaluation are shown in Table 1

The following mechanical properties are evaluated by the following tests:

In the following examples, mechanical property evaluations are made employing the following tests:

(1) Melt Flow Rate - ASTM D-1238, Condition L.
(2) Flexural Modulus, secant - ASTM D-790.
(3) Shore D Hardness - ASTM D-2240.
(4) Notched Izod - ASTM D-256.
(5) Tensile Properties - ASTM D-638.
(6) Brittleness Temperature - ASTM D-746.
(7) Vicat Softening Temperature - ASTM D-1525.
(8) Shrinkage - ASTM D-995.
(9) Density - ASTM D-2240.

TABLE I

| Polymer | Copolymer of Comp. Example 2 | Copolymer of Example 3 |
|---|---|---|
| Tensile Modulus (MPa) | 880 | 900 |
| $R_{ma}$ | 1.0 | 1.68 |
| Tensile Strength (Ultimate - MPa) | 38.0 | 43.7 |
| Dart Impact Strength (Nm/mm) | 12.5 | 14.0 |
| Peak Melting Point (DSC, °C) | 121 | 126 |

### Claims

1.  A film comprised of an isotactic copolymer of propylene and at least one $\alpha$-olefin having 5 or more carbon atoms, said $\alpha$-olefin being present in said copolymer in the range of from 0.2 to 6 mole percent, based on the total moles of monomer in said copolymer, said copolymer having a $M_w/M_n \leq 5$, a peak melting point in the range of from 100°C to 145°C, and a MFR of 0.1 - to dg/min. according to ASTM D-1238, condition L, wherein the film made from said copolymer has an $R_{ma}$ of at least 1.1, preferably at least 1.2 and more preferably at least 1.3, wherein:

$$R_{ma} = \frac{\text{Compliance of propylene-ethylene copolymer film}}{\text{Compliance of propylene-HAO copolymer film}}$$

2. The film according to claim 1, wherein said $\alpha$-olefin is selected from the group consisting of 4-methyl-1-pentene, 1-hexene and 1-octene, and is present in said copolymer in the range of 0.5 to 3 mole percent, said copolymer having a $M_w/M_n \leq 3.5$, preferably $\leq 3$, and a peak melting point in the range of 115° to 135°C.

3. The film according to claim 1 or claim 2, wherein said film further comprises a second polyolefin, wherein said second polyolefin is selected from the group consisting of polyethylene, polypropylene and olefinic elastomer.

4. The film according to any one of claims 1 - 3, wherein said copolymer further includes a second olefin comonomer having from 2 to 20 carbon atoms.

5. The film according to any one of claims 1 - 4, wherein said propylene $\alpha$-olefin copolymer is copolymerised by a metallocene-alumoxane catalysts system, wherein said metallocene is dimethylsilylbis(2-methyl-benzindenyl)zirconium dichloride and a methylalumoxane activator.

6. The film according to any one of the preceding claims, wherein the MFR according to ASTM D-1238, condition L, is 0.5 - 10 dg/min. , preferably 1 - 10 dg/min..

7. Use of an isotactic copolymer of propylene and at least one $\alpha$-olefin having 5 or more carbon atoms, said $\alpha$-olefin being present in said copolymer in the range of from 0.2 to 6 mole percent, based on the total moles of monomer in said copolymer, said copolymer having a $M_w/M_n \leq 5$, a peak melting point in the range of from 100°C to 145°C, and a MFR of 0.1 - 10 dg/min. according to ASTM D-1238, condition L, to prepare a film made from said copolymer, said film having an $R_{ma}$ of at least 1.1, preferably at least 1.2 and more preferably at least 1.3, wherein:

$$R_{ma} = \frac{\text{Compliance of propylene-ethylene copolymer film}}{\text{Compliance of propylene-HAO copolymer film.}}$$

**Patentansprüche**

1. Folie, die aus einem isotaktischen Copolymer von Propylen und mindestens einem $\alpha$-Olefin mit 5 oder mehr Kohlenstoffatomen zusammengesetzt ist, wobei das $\alpha$-Olefin bezogen auf die Gesamtmole Monomer in dem Copolymer im Bereich von 0,2 bis 6 Mol.% in dem Copolymer vorhanden ist, wobei das Copolymer ein $M_w/M_n \leq 5$, einen Peak-Schmelzpunkt im Bereich von 100°C bis 145°C und eine MFR von 0,1 bis 10 dg/Min gemäß ASTM D-1238, Bedingung L, hat, wobei die aus dem Copolymer hergestllte Folie ein $R_{ma}$ von mindestens 1,1, vorzugsweise mindestens 1,2 und insbesondere mindestens 1,3 hat, wobei

$$R_{ma} = \frac{\text{Compliance von Propylen/Ethylen-Copolymerfolie}}{\text{Compliance von Propylen/HAO-Copolymerfolie}}$$

2. Folie nach Anspruch 1, wobei das $\alpha$-olefin ausgewählt ist aus der Gruppe bestehend aus 4-Methyl-1-penten, 1-Hexen und 1-Octen und in dem Copolymer im Bereich von 0,5 bis 3 Mol.% vorhanden ist, wobei das Copolymer ein $M_w/M_n \leq 3,5$, vorzugsweise $\leq 3$ und einen Peak-Schmelzpunkt im Bereich von 115° bis 135°C hat.

3. Folie nach Anspruch 1 oder Anspruch 2, die ferner ein zweites Polyolefin enthält, wobei das zweite Polyolefin ausgewählt ist aus der Gruppe bestehend aus Polyethylen, Polypropylen und olefinischem Elastomer.

4. Folie nach einem der Ansprüche 1 bis 3, bei der das Copolymer Ferner ein zweites Olefincomonomer mit 2 bis 20 Kohlenstoffatomen aufweist.

5. Folie nach einem der Ansprüche 1 bis 4, bei der das Propylen/$\alpha$-Olefin-Copolymer mit einem Metallocen-Alumoxan-Katalysatorensystem copolymerisiert ist, wobei das Metallocen Dimethylsilylbis(2-methylbenzindenyl)zirkoniumdichlorid und ein Methylalumoxanaktivator ist.

6. Folie nach einem der vorhergehenden Ansprüche, bei der die MFR gemäß ASTM D-1238, Bedingung L, 0,5 bis 10 dg/Min, vorzugsweise 1 bis 10 dg/Min beträgt.

7. Verwendung eines isotaktischen Copolymers von Propylen und mindestens einem $\alpha$-Olefin mit 5 oder mehr Kohlenstoffatomen, wobei das $\alpha$-Olefin bezogen auf die Gesamtmole Monomer in dem Copolymer im Bereich von 0,

2 bis 6 Mol.% in dem Copolymer vorhanden ist, wobei das Copolymer ein $M_W/M_M \leq 5$, einen Peak-Schmelzpunkt im Bereich von 100°C bis 145°C und eine MFR von 0,1 bis 10 dg/Min gemäß ASTM D-1238, Bedingung L, hat, wobei die aus dem Copolymer hergestellte Folie ein $R_{ma}$ von mindestens 1,1, vorzugsweise mindestens 1,2 und insbesondere mindestens 1,3 hat, wobei

$$R_{ma} = \frac{\text{Compliance von Propylen/Ethylen-Copolymerfolie}}{\text{Compliance von Propylen/HAO-Copolymerfolie.}}$$

## Revendications

1. Film constitué d'un copolymère isotactique de propylène et d'au moins une $\alpha$-oléfine ayant 5 ou plus de 5 atomes de carbone, ladite $\alpha$-oléfine étant présente dans ledit copolymère en une quantité comprise dans l'intervalle de 0,2 à 6 % en moles sur la base du nombre total de moles de monomères dans ledit copolymère, ledit copolymère ayant une valeur de $M_w/M_n \leq 5$, un point de fusion maximal compris dans l'intervalle de 100°C à 145°C et une valeur de MFR de 0,1 à 10 dg/mn suivant la norme ASTM D-1238, condition L, le film produit à partir dudit copolymère ayant une valeur de $R_{ma}$ d'au moins 1,1, avantageusement d'au moins 1,2 et plus avantageusement d'au moins 1,3, où :

$$R_{ma} = \frac{\text{Compliance du film de copolymère propylène-éthylène}}{\text{Compliance du film de copolymère propylène-HAO.}}$$

2. Film suivant la revendication 1, dans lequel ladite $\alpha$-oléfine est choisie dans le groupe consistant en 4-méthyl-1-pentène, 1-hexène et 1-octène et est présente dans ledit copolymère en une quantité comprise dans l'intervalle de 0,5 à 3 % en moles, ledit copolymère ayant un rapport $M_w/M_n \leq 3,5$, de préférence $\leq 3$, et un point de fusion maximal compris dans l'intervalle de 115° à 135°C.

3. Film suivant la revendication 1 ou la revendication 2, ledit film comprenant en outre une seconde polyoléfine, dans lequel ladite seconde polyoléfine est choisie dans le groupe consistant en polyéthylène, polypropylène et un élastomère oléfinique.

4. Film suivant l'une quelconque des revendications 1 à 3, dans lequel ledit copolymère comprend en outre un second comonomère oléfinique ayant 2 à 20 atomes de carbone.

5. Film suivant l'une quelconque des revendications 1 à 4 dans lequel ledit copolymère propylène-$\alpha$-oléfine est copolymérisé au moyen d'un système de catalyseur à base de métallocène-alumoxane, dans lequel ledit métallocène est le dichlorure de diméthylsilylbis(2-méthylbenzindényl)zirconium, avec un activateur consistant en méthylalumoxane.

6. Film suivant l'une quelconque des revendications précédentes, dans lequel la valeur de MFR suivant la norme ASTM D-1238, condition L, est comprise dans l'intervalle de 0,5 à 10 dg/mn, de préférence de 1 à 10 dg/mn.

7. Utilisation d'un copolymère isotactique de propylène et d'au moins une $\alpha$-oléfine ayant 5 ou plus de 5 atomes de carbone, ladite $\alpha$-oléfine étant présente dans ledit copolymère en une quantité comprise dans l'intervalle de 0,2 à 6 % en moles, sur la base du nombre total de moles de monomère dans ledit copolymêre, ledit copolymère ayant une valeur de $M_w/M_n \leq 5$, un point de fusion maximal compris dans l'intervalle de 100°C à 145°C et une valeur de MFR de 0,1 à 10 dg/mn suivant la norme ASTM D-1238, condition L, pour préparer un film produit à partir dudit copolymère, le film ayant une valeur de $R_{ma}$ d'au moins 1,1, avantageusement d'au moins 1,2 et plus avantageusement d'au moins 1, 3 , où :

$$R_{ma} = \frac{\text{Compliance du film de copolymère propylène-éthylène}}{\text{Compliance du film de copolymère propylène-HAO}}$$

FIGURE  I

EFFECT OF COMONOMER ON MELTING POINT